(19) Europäisches Patentamt
European Patent Office
Office européen des brevets

(11) Veröffentlichungsnummer: **0 297 426**
**A2**

(12) **EUROPÄISCHE PATENTANMELDUNG**

(21) Anmeldenummer: **88109976.6**

(51) Int. Cl.⁴: **A01N 25/32 , A01N 43/653**

(22) Anmeldetag: **23.06.88**

(30) Priorität: **02.07.87 DE 3721852**

(43) Veröffentlichungstag der Anmeldung:
**04.01.89 Patentblatt 89/01**

(84) Benannte Vertragsstaaten:
**BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Thielert, Wolfgang Dr.**
**Hubert-Drecker-Strasse 6**
**D-5068 Odenthal(DE)**
Erfinder: **Scheinpflug, Hans Prof. Dr.**
**Am Thelenhof 15**
**D-5090 Leverkusen 1(DE)**
Erfinder: **Lubosch, Johannes Dr.**
**Verresberger Strasse 45**
**D-4019 Monheim 2(DE)**

(54) **Fungizide Saatgutbehandlungsmittel.**

(57) Neue fungizide Wirkstoffkombinationen aus
A) Azolfungiziden der Formel

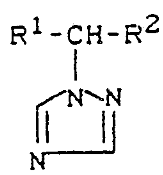

(I)

in welcher
$R^1$ für Wasserstoff steht und
$R^2$ für die Gruppierung

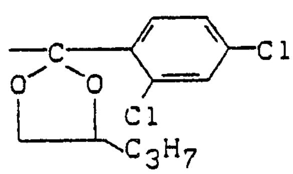

steht,
oder
$R^1$ für die Gruppierung

**EP 0 297 426 A2**

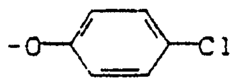

steht

und

$R^2$ für die Gruppierung

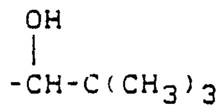

steht,

oder Azolfungiziden der Formel

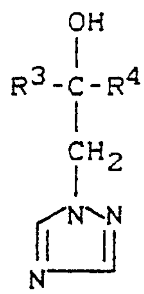

(II)

in welcher

$R^3$ für die Gruppierung

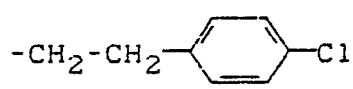

steht und

$R^4$ für tert.-Butyl steht, oder

$R^3$ für die Gruppierung

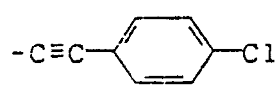

steht und

$R^4$ für Fluor-tert.-butyl steht,

und

B) 3′,4′,5′,6′-Tetrachlor-2,4,5,7-tetraiodfluorescein-Dinatriumsalz, und/oder Cyclopropylamin und/oder 2,6,10,15,19,23-Hexamethyl-2,6,10,14,18,22-tetracosa-hexaen und/oder 2,6,10,15,19,23-Hexamethyltetracosan eignen sich zur Beizung von Saatgut gegen Pilzbefall und besitzen eine hohe Pflanzenverträglichkeit.

## Fungizide Saatgutbehandlungsmittel

Die Erfindung betrifft neue fungizide Wirkstoffkombinationen zur Behandlung von Saatgut. Die Wirkstoffkombinationen bestehen einerseits aus bekannten Azolfungiziden und andererseits aus bestimmten bekannten Zusatzstoffen und besitzen eine hohe Pflanzenverträglichkeit.

Es ist bereits bekannt, daß zahlreiche Azolfungizide als Beizmittel zur Saatgutbehandlung eingesetzt werden können (vgl. Büchel "Pflanzenschutz und Schädlingsbekämpfung", Georg Thieme Verlag, Stuttgart 1977, Seiten 151 und 152). So lassen sich z.B. 1-(4-Chlorphenoxy)-3,3-dimethyl-1-(1,2,4-triazol-1-yl)-butan-2-ol, 1-[2-(2,4-Dichlorphenyl)-4-propyl-1,3-dioxolan-2-yl)-methyl]-1H-1,2,4-triazol, 1-(4-Chlorphenyl)-4,4-dimethyl-3-(1,2,4-triazol-1-yl-methyl)-pentan-3-ol und 1-(4-Chlorphenyl)-4,4-dimethyl-5-fluor-3-(1,2,4-triazol-1-yl-methyl)-1-pentin-3-ol zur Beizung von Saatgut gegen Pilzbefall verwenden (vgl. DE-OS 2 324 010, DE-OS 2 551 560, EP-OS 0 040 345 und EP-OS 0 108 995). Nachteilig ist jedoch, daß bei ungünstigen Keimungsbedingungen im Saatbett in manchen Fällen das Längenwachstum der Pflanzen beeinträchtigt werden kann, woraus ein reduzierter Feldaufgang resultiert. Diese Erscheinungen treten vor allem bei zu nassen, zu trockenen oder verschlämmten Böden, bei niedrigen Temperaturen oder auch bei tiefer Saat verstärkt auf.

Es wurde nun gefunden, daß die neuen Wirkstoffkombinationen aus

A) Azolfungiziden der Formel

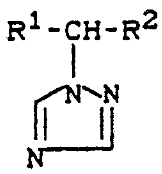

(I)

in welcher

$R^1$ für Wasserstoff steht und

$R^2$ für die Gruppierung

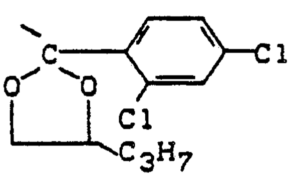

steht,

oder

$R^1$ für die Gruppierung

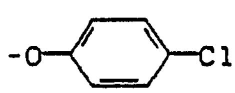

steht

und

$R^2$ für die Gruppierung

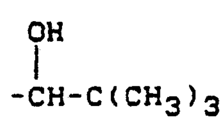

steht,

oder Azolfungiziden der Formel

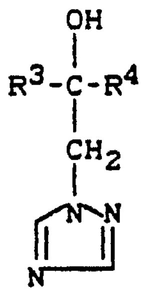

(II)

in welcher
$R^3$ für die Gruppierung

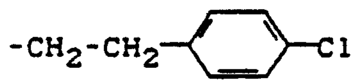

steht und
$R^4$ für tert.-Butyl steht, oder
$R^3$ für die Gruppierung

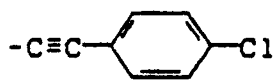

steht und
$R^4$ für Fluor-tert.-butyl steht,
und
B) 3′,4′,5′,6′-Tetrachlor-2,4,5,7-tetraiodfluorescein-Dinatriumsalz der Formel

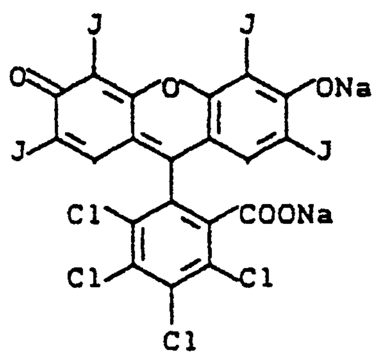

(III)

und/oder
Cyclopropylamin der Formel

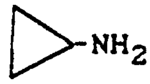

(IV)

und/oder
2,6,10,15,19,23-Hexamethyl-2,6,10,14,18,22-tetracosahexaen der Formel

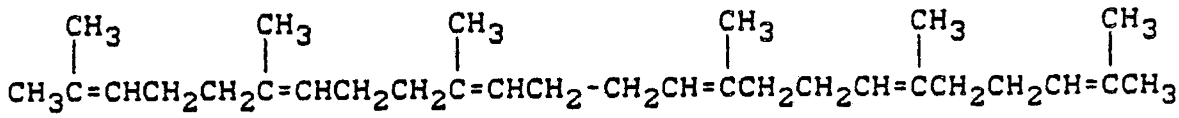

(V)

und/oder
2,6,10,15,19,23-Hexamethyl-tetracosan der Formel

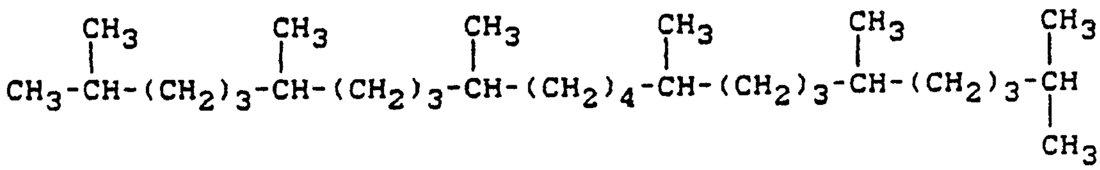

(VI)

sehr gut zur Beizung von Saatgut gegen Pilzbefall geeignet sind.

Es ist als äußerst überraschend zu bezeichnen, daß die erfindungsgemäßen Wirkstoffkombinationen bei der Beizung von Saatgut gegen Pilzbefall eine wesentlich bessere Pflanzenverträglichkeit besitzen als die entsprechenden Azolbeizmittel, die keine Zusatzstoffe der Formel (III), (IV), (V) und/oder (VI) enthalten. Die Steigerung der Pflanzenverträglichkeit ist vor allem deshalb unerwartet, weil durch den bekannten Stand der Technik keinerlei Hinweise darauf gegeben wurden, durch welche Stoffe dieser Effekt eventuell zu erzielen wäre.

Die in den erfindungsgemäßen Wirkstoffkombinationen vorhandenen Azolfungizide sind durch die Formeln (I) und (II) definiert. Azolfungizide dieser Strukturen sind

- 1-(4-Chlorphenoxy)-3,3-dimethyl-1-(1,2,4-triazol-1-yl)-butan-2-ol der Formel

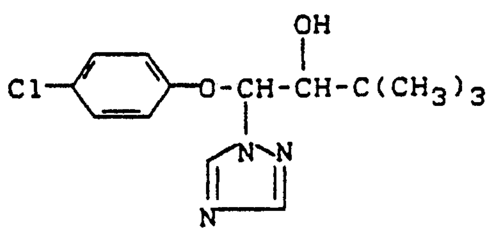

(I-1)

- 1-[2-(2,4-Dichlorphenyl)-4-propyl-1,3-dioxolan-2-yl)-methyl]-1H-1,2,4-triazol der Formel

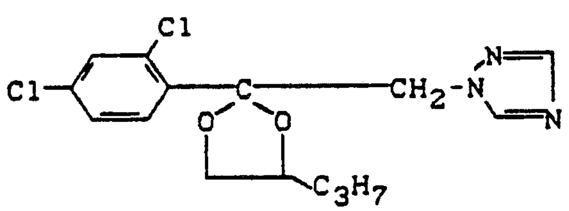

(I-2)

- 1-(4-Chlorphenyl)-4,4-dimethyl-3-(1,2,4-triazol-1-yl-methyl)-pentan-3-ol der Formel

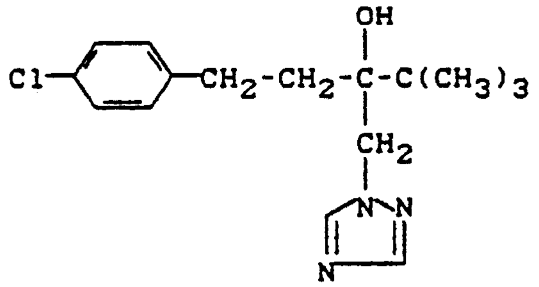

(II-1)

und

- 1(4-Chlorphenyl)-4,4-dimethyl-5-fluor-3-(1,2,4-triazol-1-yl-methyl)-pentin-3-ol der Formel

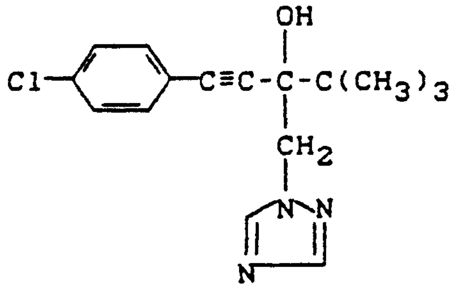

(II-2).

Diese Azolfungizide sind bekannt (vgl. DE 2 324 010, DE-OS 2 551 560, EP-OS 0 040 345 und EP-OS 0 108 995).

Die in den erfindungsgemäßen Wirkstoffkombinationen außerdem enthaltenen aktiven Komponenten sind durch die Formeln (III), (IV), (V) und (VI) definiert. Das 3',4',5',6'-Tetrachlor-2,4,5,7-tetraiod-fluoroescein-Dinatriumsalz der Formel (III) wird auch als Bengalrosa bezeichnet, während es sich bei dem 2,6,10,15,19,23-Hexamethyl-2,6,10,14,18,22-tetracosahexaen der Formel (V) um das Squalen und bei dem 2,6,10,15,19,23-Hexamethyl-tetracosan der Formel (VI) um das Squalan handelt. Die Stoffe der Formeln (III), (IV), (V) und (VI) sind bekannt.

Wenn die Wirkstoffe der Gruppe (A) und die Zusatzstoffe der Gruppe (B) in den erfindungsgemäßen Wirkstoffkombinmationen in bestimmten Gewichtsverhältnissen vorhanden sind, ist die Pflanzenverträglichkeit besonders ausgeprägt. Jedoch können die Gewichtsverhältnisse der Azolfungizide aus Gruppe (A) und der Zusatzstoffe aus Gruppe (B) in den Wirkstoffkombinationen in einem relativ großen Bereich variiert werden. Im allgemeinen entfallen auf 1 Gew.-Teil an Azolfungizid aus Gruppe (A) 0,1 bis 50 Gew.-Teile, vorzugsweise 0,2 bis 25 Gew.-Teile an Zusatzstoff aus der Gruppe (B).

Die erfindungsgemäßen Wirkstoffkombinationen besitzen eine sehr gute Pflanzenverträglichkeit und lassen sich zur Behandlung von Saatgut gegen Befall durch phytopathogene Pilze, wie Ascomycetes, Basidiomycetes, Deuteromycetes usw. einsetzen. Sie eignen sich besonders gut zur Bekämpfung von Getreidekrankheiten.

Die erfindungsgemäßen Wirkstoffkombinationen können in die üblichen Beizmittel-Formulierungen überführt werden, wie Lösungen, Emulsionen, Suspensionen und Pulver.

Diese Beizmittel-Formulierungen werden in bekannter Weise hergestellt, z.B. durch Vermischen von Azolfungiziden der Gruppe (A) und Zusatzstoffen der Gruppe (B) mit Streckmitteln, also flüssigen Lösungsmitteln und/oder festen Trägerstoffen, gegebenenfalls unter Verwendung von oberflächenaktiven Stoffen, also Emulgiermitteln und/oder Dispergiermitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als Emulgiermittel kommen in Frage: z.B. nichtionogene

und anionische Emulgatoren, wie Polyoxyethylen-Fettsäureester, Polyoxyethylen-Fettalkoholether, z.B. Alkylarylpolyglykolether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalicyanin-farbstoffe und Spurennährstoffe, wie Salze von Eisen, Mangan, Bor, Kupfer, Kobalt, Molybdän und Zink verwendet werden.

Die Beizmittel-Formulierungen lassen sich auch so herstellen, daß man zunächst Formulierungen auf Basis von Azolfungiziden der Formeln (I) und/oder (II) zubereitet und dann Zusatzstoffe der Formel (III), (IV), (V) und/oder (VI) hinzufügt.

Die Formulierungen enthalten im allgemeinen zwischen 2 und 30 Gew.-% an Stoffen aus den Gruppen (A) und (B), vorzugsweise zwischen 3 und 17,5 Gew.-%.

Die erfindungsgemäßen Wirkstoffkombinationen können in den Beizmittel-Formulierungen in Mischung mit anderen bekannten Wirkstoffen vorliegen, wie Fungizide, Insektizide, Akarizide und Herbizide, sowie in Mischungen mit Düngemitteln.

Die erfindungsgemäßen Wirkstoffkombinationen können in Form ihrer Formulierungen oder den daraus bereiteten Anwendungsformen, wie gebrauchsfertige Lösungen, emulgierbare Konzentrate, Emulsionen, Suspensionen, Spritzpulver und lösliche Pulver, angewendet werden. Die Anwendung geschieht in üblicher Weise, also z.B. durch Trockenbeizen, Feuchtbeizen, Naßbeizen, Schlämmbeizen oder Inkrustieren.

Bei der Saatgutbehandlung werden im allgemeinen Wirkstoffe aus den Gruppen (A) und (B) in Mengen von 0,1 bis 1,5 g je Kilogramm Saatgut, vorzugsweise 0,15 bis 0,875 g benötigt.

Die gute Pflanzenverträglichkeit der erfindungsgemäßen Wirkstoffkombinationen geht aus den folgenden Beispielen hervor.

Beispiel 1

Pflanzenverträglichkeitstest/Saatgutbehandlung

Testpflanze: Sommergerste "Villa"

Als Beizmittel-Formulierungen werden

a) eine handelsübliche Beizmittel-Formulierung auf Basis des Azolfungizides der Formel (I-1) und

b) handelsübliche Beizmittel-Formulierungen auf Basis des Azolfungizids der Formel (I-1), welchen der jeweilige Zusatzstoff in der jeweils angegebenen Menge zugefügt wurde, eingesetzt. Die Anwendung des Wirkstoffes bzw. der Wirkstoffkombinationen erfolgt als Trockenbeizmittel.

Zur Beizung schüttelt man das Saatgut 3 Minuten lang mit dem Beizmittel in einer verschlossenen Glasflasche.

Das Saatgut sät man mit 3 x 100 Korn auf eine Schicht von 3 cm Quarzsand, überschichtet dann mit einer Schicht von 3 cm gewaschenem Ziegelgrus und kultiviert es im Gewächshaus bei einer Temperatur von 10 °C bei einer relativen Luftfeuchtigkeit von 80 bis 90 % und einer täglich 13-stündigen Belichtung von ca. 10 000 LUX.

Die Auswertung erfolgt am 10. und 21. Tag nach der Beizung. Angegeben wird dabei die Anzahl der aufge laufenen Pflanzen, um die Triebkraft zu charakterisieren. Zusätzlich wird das mittlere Sproßfrischgewicht je Pflanze als Verträglichkeitsparameter angegeben.

Wirkstoffe, Wirkstoffkonzentrationen und Versuchsergebnisse gehen aus den folgenden Tabellen hervor.

Tabelle 1-A

Pflanzenverträglichkeitstest/Sommergerste

| Wirkstoff bzw. Wirkstoff-kombination | Wirkstoff-aufwandmenge g/100 kg Saatgut | Aufgelaufene Pflanzen nach 10 Tagen | nach 20 Tagen | Sproß-gewicht in g |
|---|---|---|---|---|
| - (Kontrolle) | - | 94 | 97 | 4,2 |
| (I-1) | 37,5 | 29 | 84 | 2,4 |
| (I-1) + (III) | 37,5 + 10 | 56 | 88 | 4,4 |
| (I-1) + (III) | 37,5 + 50 | 74 | 91 | 3,1 |
| (I-1) + (III) | 37,5 + 100 | 71 | 91 | 2,7 |
| (I-1) + (IV) | 37,5 + 10 | 42 | 86 | 3,6 |
| (I-1) + (IV) | 37,5 + 50 | 51 | 87 | 3,3 |
| (I-1) + (IV) | 37,5 + 100 | 71 | 91 | 3,6 |

Tabelle 1-B

Pflanzenverträglichkeitstest/Sommergerste

| Wirkstoff bzw. Wirkstoff-kombination | Wirkstoff-aufwandmenge g/100 kg Saatgut | Aufgelaufene Pflanzen nach 10 Tagen | nach 20 Tagen | Sproß-gewicht in g |
|---|---|---|---|---|
| - (Kontrolle) | - | 89 | 96 | 7,1 |
| (I-1) | 37,5 | 57 | 81 | 5,4 |
| (I-1) + (VI) | 37,5 + 10 | 74 | 87 | 9,0 |
| (I-1) + (VI) | 37,5 + 50 | 69 | 86 | 6,2 |
| (I-1) + (VI) | 37,5 + 100 | 79 | 90 | 7,6 |

Beispiel 2

Pflanzenverträglichkeitstest/Saatgutbehandlung

Testpflanze: Winterweizen "Jubilar"

Als Beizmittel-Formulierungen werden

a) eine handelsübliche Beizmittel-Formulierung auf Basis des Azolfungizides der Formel (I-1) und

b) handelsübliche Beizmittel-Formulierungen auf Basis des Azolfungizids der Formel (I-1), welchen der jeweilige Zusatzstoff in der jeweils angegebenen Menge zugefügt wurde, eingesetzt. Die Anwendung des Wirkstoffes bzw. der Wirkstoffkombinationen erfolgt als Trockenbeizmittel.

Zur Beizung schüttelt man das Saatgut 3 Minuten lang mit dem Beizmittel in einer verschlossenen Glasflasche.

Die Aussaat des Saatgutes erfolgt im Freiland auf einem sandigen Lehmboden, der zuvor unter praxisüblichen Bedingungen vorbereitet wurde.

Die Auswertung erfolgt 14 Tage nach der Aussaat. Angegeben wird dabei die Anzahl der aufgelaufenen Pflanzen pro Parzelle von 2 $m^2$ Größe.

Wirkstoffe, Wirkstoffkonzentrationen und Versuchsergebnisse gehen aus der folgenden Tabelle hervor.

Tabelle 2

Pflanzenverträglichkeitstest/Winterweizen

| Wirkstoff bzw. Wirkstoff-kombination | Wirkstoff-aufwandmenge g/100 kg Saatgut | Anzahl Pflanzen/ 2 $m^2$ | Aufgelaufene Pflanzen in % der Kontrolle |
|---|---|---|---|
| - (Kontrolle) | - | 773 | = 100 |
| (I-1) | 37,5 | 631 | 81,6 |
| (I-1) + (V) | 37,5 + 25 | 689 | 89,1 |
| (I-1) + (V) | 37,5 + 50 | 694 | 89,7 |
| (I-1) + (V) | 37,5 + 100 | 672 | 86,9 |

## Ansprüche

1. Fungizide Saatgutbehandlungsmittel, gekennzeichnet durch einen Gehalt an einer Wirkstoffkombination bestehend aus

A) Azolfungiziden der Formel

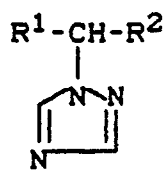

(I)

in welcher
$R^1$ für Wasserstoff steht und
$R^2$ für die Gruppierung

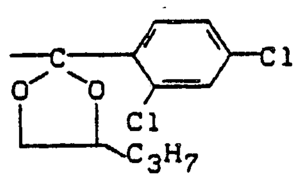

steht,

oder

$R^1$ für die Gruppierung

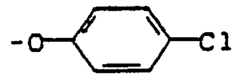

steht

und

$R^2$ für die Gruppierung

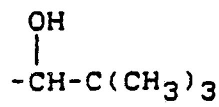 steht,

oder Azolfungiziden der Formel

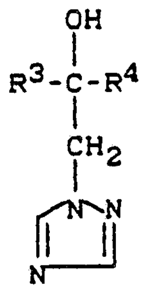

(II)

in welcher

$R^3$ für die Gruppierung

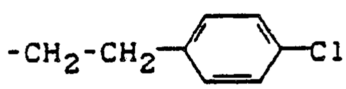

steht und

$R^4$ für tert.-Butyl steht, oder

$R^3$ für die Gruppierung

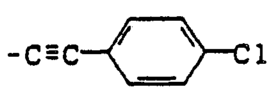

steht und

$R^4$ für Fluor-tert.-butyl steht,

und

B) 3′,4′,5′,6′-Tetrachlor-2,4,5,7-tetraiodfluorescein-Dinatriumsalz der Formel

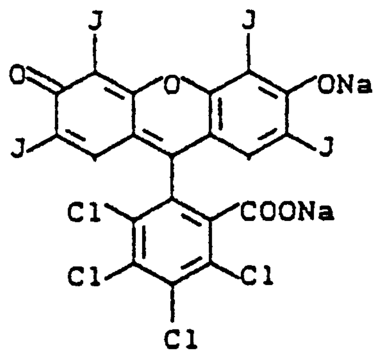

(III)

und/oder
Cyclopropylamin der Formel

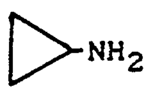

(IV)

und/oder
2,6,10,15,19,23-Hexamethyl-2,6,10,14,18,22-tetracosahexaen der Formel

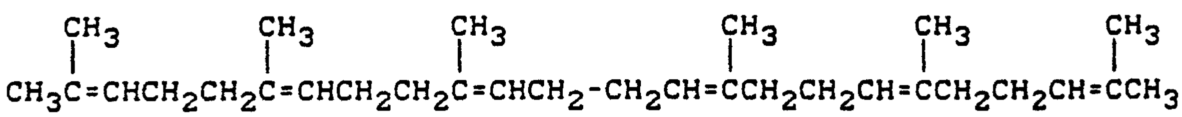

(V)

und/oder
2,6,10,15,19,23-Hexamethyl-tetracosan der Formel

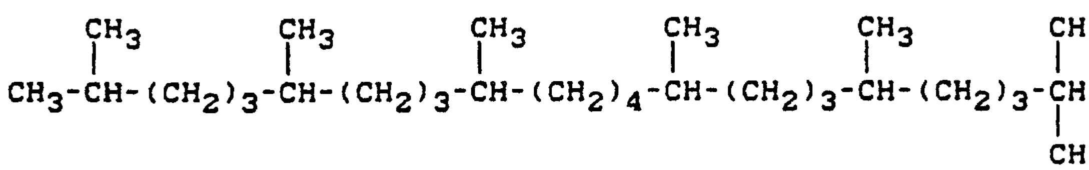

(VI)

2. Mittel gemäß Anspruch 1, dadurch gekennzeichnet, daß in den Wirkstoffkombinationen das Gewichtsverhältnis von Wirkstoff der Gruppe (A) zu Zusatzstoff der Gruppe (B) zwischen 0,1 und 50 liegt.

3. Verfahren zur Beizung von Saatgut, dadurch gekennzeichnet, daß man Wirkstoffkombinationen gemäß Anspruch 1 auf das Saatgut aufbringt.

4. Verwendung von Wirkstoffkombinationen gemäß Anspruch 1 zur Behandlung von Saatgut.

5. Verfahren zur Herstellung von Saatgutbehandlungsmitteln, dadurch gekennzeichnet, daß man Wirkstoffkombinationen gemäß Anspruch 1 mit Streckmitteln und/oder oberflächenaktiven Stoffen vermischt.